# EUROPEAN PATENT SPECIFICATION

(11) **EP 0 247 630 B1**
(45) Date of publication and mention of the grant of the patent: **31.01.1996**
(21) Application number: 87107834.1
(22) Date of filing: 29.05.1987
(51) Int. Cl.: C04B 41/87, B23D 59/00

(54) **Material for cutting tools, use of same and cutting tools**
Material für Schneidvorrichtungen, dessen Anwendung und Schneidvorrichtungen
Matériau pour dispositifs de découpage, son utilisation et dispositifs de découpage

(30) Priority: 28.05.1986 JP 121120/86; 30.05.1986 JP 123506/86; 14.07.1986 JP 163596/86
(43) Date of publication of application: 02.12.1987
(73) Proprietor: NGK Spark Plug Co. Ltd., Nagoya-shi Aichi-ken 467 (JP)
(72) Inventor: Suzuki, Junichiro, Hashima-gun, Gifu-ken (JP); Sakakibara, Shoji, Kasugai-shi, Aichi-ken (JP)
(74) Representative: Diehl, Hermann O. Th., Dr.

(56) References cited:
- GB-A- 2 157 282
- US-A- 4 507 224
- US-A- 4 543 345

## Description

This invention relates to materials for cutting tools, use of the same in cutting and cutting tools.

As cutting tools for high speed cutting of ferrous or other metallic work-pieces, there have generally been known those which are composed of the following materials: (1) Al₂O₃ type or Si₃N₄ type ceramic sintered body; (2) TiC type cermet; (3) cemented carbides coated with ceramic materials such as Al₂O₃, etc.; and so on. Of these various materials, the Al₂O₃ or Si₃N₄ type ceramic sintered body itself has no sufficient mechanical strength, hence it could not be applied for machining steel, although it was practically used for cast iron machining. As for the TiC cermet, while it possesses a higher mechanical strength than the above-mentioned ceramic sintered body, it considerably reduces its wear-resistant property when the cutting speed becomes increased so that the material imposes on itself a limit to the cutting speed. The ceramic-coated cemented carbide, on the other hand, has its own disadvantage such that, owing to the poor chemical affinity between the ceramic coating and the substrate, differences in the thermal expansion coefficient, and so on, the ceramic coating suffers from peeling off when the cutting speed is increased or an impact force is imparted to the work-piece with the consequent lowering in its wear-resistant property or occurrence of defect therein, which also imposes on the material a limit to the range of its use.

From GB 2 157 282 A a sintered nitride-based ceramic material is known having as the main components a polytype of Si-Al-O-N together with beta' and/or alpha' Si-Al-O-N. The material also contains an intergranular phase and, depending on the composition, crystalline AlN or Al₂O₃. The properties of the material, such as the wear resistance and toughness behaviour, can be improved by adding hard refractor principles and/or fine whisker like fibers. Coating with hard, inert and wear resistant layers is another alternative. The material can be used as cutting tools but also other applications are possible, e.g. as engine components, wear parts, heat exchangers or as substrate material in the electronic industry.

It is therefore the object of the present invention to provide a material for cutting tools which are widely applicable to various ferrous work-pieces and capable of cutting them at high speed. This object is solved by the material of independent claims 1, 10, 11 and 12. Further advantageous features of these materials are described in the dependent claims. The invention also provides for use of these materials and for cutting tools made from these materials.

The present invention provides cutting tools or materials therefor, which have high mechanical strength, are excellent in their durability, particularly heat-resistant property and wear-resistant property, and are capable of preventing them from fused adhesion with the work-piece.

Other details and advantages will become apparent in the entire disclosure.

According to the present invention, in one aspect thereof, there is provided a material for cutting tools, which comprises in combination:
a) a substrate based on a matrix composed of at least one selected from the group consisting of Al₂O₃, AlN, AlON, 3Al₂O₃·2SiO₂ (mullite) and TiC, the substrate comprising 5 to 50% by weight of SiC whiskers with respect to said substrate, the whiskers being uniformly dispersed therein; and
b) one or more coating layers composed at least one of oxides, nitrides, carbides, borides and oxinitrides of at least one of aluminum, IVa and Va group elements in the International Periodic Table, said coating layer being formed on the surface of said substrate to a thickness ranging from about 0.3 to about 20 µm.

According to the present invention, in a second aspect thereof, there is provided a material for cutting tools, which comprises in combination:
a) a substrate based on an Al₂O₃ matrix, and comprising 5 to 70% by weight of SiC whiskers,and
b) one or more coating layers composed of oxides, nitrides, carbides, carbonitrides, oxicarbides or oxicarbo-nitrides of IVa or Va group elements in the International Periodic Table, or oxide, nitride or oxinitride of aluminum, said coating layer being formed on the surface of said substrate to a thickness ranging from about 0.3 to about 20 µm.

According to the present invention, in a third aspect thereof, there is provided a material for cutting tools, which comprises in combination:
a) a substrate based on an Al₂O₃ matrix; and comprising 5 to 50% by weight of SiC whiskers;
b) 1 to 35% by weight of at least one of substituting component selected from the group consisting of metals of IVa, Va or VIa group elements in the International Periodic Table, oxides, nitrides, carbides or borides of these metallic elements, or solid-solutions of these compounds, and SiC; and
c) one or more coating layers composed of oxides, nitrides, carbides, carbonitrides, oxicarbides or oxicarbo-nitrides of IVa or Va group elements in the International Periodic Table, or oxide, nitride or oxinitride of aluminum, said coating layer being formed on the surface of said substrate to a thickness of about 0.3 to about 20 µm.

According to the present invention, in a fourth aspect thereof, there is provided a material for cutting tools, which comprises in combination:
a) a substrate based on AlN matrix, and comprising 5 to 50% by weight of SiC whiskers; and
b) one or more coating layers composed of at least one of oxides, nitrides, carbides, carbonitrides, oxicarbides or oxicarbo-nitrides of IVa or Va group elements of the International Periodic Table, or oxide, nitride and oxinitride of aluminum, said coating layer being formed on the surface of said substrate to a thickness of from about 0.3 to about 20 µm.

According to the present invention, in still other (fifth) aspect thereof, there are provided cutting tools which are made up of the above mentioned materials in foregoing various aspects of the present invention.

According to the present invention, in a still further aspect thereof, there is provided a method for high speed cutting of ferrous work-piece by use of the cutting tools.

When a ferrous work-piece is cut at a high speed, considerable rise in the cutting temperature is observed, on account of which the wear-resistant property and the mechanical strength of the cutting tool begin to decrease to bring about damage to the cutting tool. It is therefore considered favorable to employ a ceramic material having excellent heat-resistant property as the principal component of the material for the cutting tools. However, the ceramic itself has, in general, low toughness, solution of this point being of consequence among other things. From this point of view, the present inventors have found out that the use of Al₂O₃, AlON, AlN, 3Al₂O₃.2SiO₂ (called "mullite") or TiC as the principal component are particularly superior. The ceramics of these materials per se, however, are not satisfactory in their mechanical strength.

With a view to solving this problem, the present inventors conducted various studies and researches to increase the mechanical strength of the ceramic material without causing reduction in its heat-resistant property and the wear-resistant property. As the result, they have come to note that, when silicon carbide (SiC) whiskers having high mechanical strength, high heat-resistant property and high heat conductivity uniformly dispersed in the ceramic material, improvement in the material toughness can be attained effectively without losing its heat-resistant property. (Note: the technique of incorporating the whiskers in the ceramic material is disclosed in Japanese patent Kokai Publications No. 59-102862 and No. 59-102861 for the purpose of imparting high electrical conductivity to the material, and in US-A-4,543,345 for the purpose of imparting toughness thereto; in these publications, however, no mention is made at all as to effectiveness of such techniques in obtaining cutting tools of improved mechanical property, heat-resistance and wear-resistance.) It has, however, been found out that SiC per se (even SiC whiskers) possesses excellent affinity for iron, as its basic property, which causes welded adhesion between a ferrous work-piece and the material, constituting the cutting tool (more specifically, SiC whisker) during high speed cutting, whereby there takes place removal of the SiC whiskers from the ceramic body to reduce the wear-resistance of the cutting tool to a considerable degree to render it unsuitable for practical use.

The present inventors, therefore, carried out further and repeated studies and researches to break through this problem, as the result of which they have discovered that, with a view to inhibiting the reaction between the SiC whiskers and the ferrous work-piece, the material for the cutting tool containing therein SiC as the reinforcing component may be coated with oxides, nitrides, carbides of aluminum (Al) or the IVa group transition metal elements in the International Periodic Table, or solid-solutions of these compounds.

On the other hand, the technique of improving the wear-resistant property of the matrix by providing a coating layer on a cemented carbide has been well known, as already mentioned in the foregoing. However, a combustion of the cemented carbide and the ceramic coating has generally low adhesion (or bonding) strength between them, hence both are apt to peel off easily. Further important is a point, in which the cemented carbide is apt to be subjected to plastic deformation due to heat and pressure to be generated at the time of high speed cutting, whereby the cutting edge is rendered dull and blunt.

Also, a technique of coating an Al₂O₃ ceramic body with on Al₂O₃ layer has already been disclosed in, for example, Japanese patent kokoku publication No. 53-13276. This technique, however, is to render the surface of the Al₂O₃ ceramic body to have a very fine grain size of Al₂O₃ so that the wear-resistance of Al₂O₃ may be improved by the increased mechanical strength thereof due to its reduction into the very fine grain size. On account of this, the prior art is particularly limited to the very fine grain size of Al₂O₃ on the surface of the Al₂O₃ substrate, as the essential construction thereof. According to the present invention, on the other hand, since the mechanical strength of the substrate is attained by incorporation of the whiskers there will be no necessity for coating the surface of the substrate, for such purpose, as has been done in the prior art.

Throughout this application, the elements used will be defined in accordance with the International Periodic Table. The term "solid solution" refers to substances such as TiCO, TiCN, TiCNO etc. However, AlON is not a solid solution, rather, "AlON" represents a generic term which includes Al₂₇O₃₉N, Al_{(8/3 + x/3)}O₄₋ₓNₓ (0 < x < 0.5), Al₁₉₆O₂₈₈N₄ and the like, the AlON compounds being variant due to each ratio of Al, O and N.

For the matrix to be used for the purpose of the present invention, there is used according to one aspect (1) an Al type material such as Al₂O₃, AlN, AlON, or 3Al₂O₃.2SiO₂ (mullite); or (2) a Ti type such as TiC; or (3) composite materials of the abovementioned (1) and (2) such as, for example, Al₂O₃-TiC. The matrix essentially occupies the balance to SiC whiskers in the substrate. With a substituent component or a sintering aid referred hereinafter, the matrix amounts to at least 50 weight % per said balance. Further, for such matrix, mixtures of two or more of the abovementioned compounds and substances may be useful, of which combinations of Al₂O₃-TiC, Al₂O₃-AlON, Al₂O₃-AlON-AlN, AlON-AlN, 3Al₂O₃.2SiO₂-TiC and the like are preferable.

The quantity of the SiC whiskers to be included in the matrix should range generally from 5 to 50% by weight, or preferably from 5 to 30% by weights more preferably from 15 to 30% by weight. When the SiC whisker content is below 5% by weight, no satisfactory toughness can be obtained; on the other hand, when the whiskers exceed 50% by weight, the matrix will generally have poor sinterability with the consequent inability to obtain a densely sintered body. However, in the case of a Al₂O₃ matrix, SiC whiskers may amount to up to 70% by weight, while up to 50% by weight is preferred for the practical productivity (second aspect).

The SiC whiskers may be selected as follows:
a) diameter is in a range of from 0.1 to 2.0 µm, or optimumly from 0.5 to 1.0 µm;
b) length is 200 µm or less, or more preferably 100 µm or less, or optimumly 30 µm or less;
c) aspect ratio is in a range of from 50 to 300; and d) density is about 3.2 g/cm³ (i.e., the relative density is 95% or more). It is preferred that whiskers having a length of 1 to 20 µm are uniformly dispersed into the sintered body. The aspect ratio is preferably 2 to 30, more preferably 2 to 10, the crystal structure may be either of the α-type or β-type.

According to a further aspect of the present invention the matrix may be substituted, in an amount of its 50% by weight or below (or depending on the substituent, 35% by weight or below, or 10% by weight or below) with at least one kind of substance selected from the group consisting of metallic elements of Al, Si and IVa, Va and VIa groups in the International Periodic Table, or oxides, nitrides, carbides, and borides of these metallic elements, whereby it becomes possible to increase various properties of the matrix such as sinterability, heat-resistance, hardness, toughness, and so forth over the base matrix. For instance ZrO₂ will render a higher toughness. (Note, here, SiC does not refer to whiskers, but powdery SiC.) When the substituent exceeds 50% by weight or above, the fundamental properties of the matrix per se cannot be taken advantage of. From this, a more acceptable amount of the matrix fraction to be substituted with the abovementioned metallic elements and their various compounds will be 35% by weight or below. The addition of the IVa (Ti, Zr, Hf), Va (V, Nb, Ta), and VIa (Cr, Mo, W) group elements or compounds thereof to the matrix would contribute to inhibition of the grain growth of the matrix during sintering, and formation of a highly densified sintered body. Preferred substitutive examples are Sample Nos. 5, 8, 12 and 16 in Example A2, Sample No. 1 in Example 1, Sample No. 1 in Example, Sample Nos. 3 and 4 in Example E and the like. Certain substituting components constitute a part of the matrix component group. Under such conditions, the substituents may sometimes amount to 50 weight % or more per the entire matrix. Here, it is noted that the substituting component may hold concurrently a function as a sintering aid referred hereinafter. For example, substitution with AlN or ZrO₂ for the Al₂O₃ matrix; or substitution with Al₂O₃ or compounds of IVa, Va or VIa-elements for the TiC matrix have dual functions, i.e., as the substituting component and as the sintering aid.

The substrate having a composition composed of the abovementioned matrices, the SiC whiskers, and further the substituent components should preferably have a relative density (to the theoretical one) of 97% or above, or more preferably 98% or above. Also, the average crystal grain size of the matrix should preferably be 5 µm or below, or more preferably 3 µm or below.

As for the coating layer, an average thickness of a hard coating layer should range from about 0.3 to about 20 µm. When it is thinner than 0.3 µm, no substantial effect of such coating layer can be obtained. On the other hand, when it is thicker than 20 µm, it will have nothing to do with improvement in the wear-resistance, which is not only uneconomical, but also becomes liable to produce undesirable chipping.

This holds for single and multiply layers, 0.5 µm to 15 µm thickness is preferred. For the single layer, it is preferably from 1 to 10 µm. For the multiply layers, the first (innermost) layer is preferably 0.2-5 µm, more preferably 0.2-3 µm; while, for the outer layer 1-10 µm is preferred (more rpeferred 1-5 µm).

Materials for the coating layer may be appropriately determined in relation to the material constituting the substrate matrix. That is to say, of the coating layers, the one which is directly adhered onto the substrate (i.e., in the case of a single layer, the single layer per se; and, in the case of a plurality of layers, the innermost one which is to be positioned closest to the substrate) may be of the same metal component as that consituting the substrate matrix, whereby the adhesive strength between the substrate matrix and the coating layer can be maintained in good condition even at a high temperature. More concretely, when the matrix for the substrate is an aluminum compound such as Al₂O₃, AlN, AlON or 3Al₂O₃.2SiO₂ (mullite), the adhering layer may also be composed of the Al-base substance such as, for example, Al₂O₃, AlN or AlON. On the other hand, when the matrix is TiC, the adhering layer should preferably be of a Ti-base substance, such as TiC, TiN, TiCN, TiCO, TiON, TiCON, TiO₂ or TiB₂.

Of the coating layers, the one to be in direct contact with a work-piece (the outermost layers which, in the case of a single layer, may be the single layer per se; and, in the case of a plurality of layers, a layer which is at the farthest position from the substrate) may be composed based on aluminum or IVa group transition metals. When the work-piece is cast iron, the coating layer should preferably be Al₂O₃, AlON or TiC, or more preferably TiC. On the other hand, when the work-piece is of alloy steel in general, the coating layer should preferably be of Al₂O₃, AlON or TiC, or more preferably Al₂O₃.

As for the method of manufacturing such cutting tools, the substrate therefor is produced by sintering. For the sintering method, there may be adopted various methods such as, for example, normal sintering or pressure-sintering like hot pressing (HP) or hot isostatic pressing (HIP). Referring to the sintering condition, it is preferred that a compact is sintered at 1600 - 1950 °C for 0.25 to 1 hour. In the HP method, the pressure may be 100 - 400 kg/cm². For sintering, there may be added an appropriate sintering aid, More specifically, in the case with the Al₂O₃ type matrix, there may preferably be added MgO, CaO, ZrO₂, NiO, SiO₂, Y₂O₃, oxides of rare earth elements, or mixtures of these compounds. In the case with the AlN type matrix, there may preferably be added, for example, CaO, Y₂O₃, SiO₂, Al₂O₃, Mo, W, Mo₂C, WC, oxides of the rare earth elements, or a mixture of these compounds. Such sintering aid should preferably be 10% by weight or below, or more preferably 5% by weight or below, in general from the standpoint of heat conductivity, mechanical strength at high temperature, and others.

The coating layer can be disposed on the surface of the substrate in various manners such as, for example, chemical vapor deposition (CVD) method, physical vapor deposition (PVD) method, or physico-chemical deposition method. The CVD technique is suitable for multi-coating, while the PVD technique is suitable for single-coating, particularly of a large thickness. According to the PVD technique, a compression stress remains in the coating layer, resulting in a superior fracture resistance.

The cutting tools according to the present invention are highly suited for the high speed cutting (generally, at 500 m/min. or above, or 800 m/min. or above) of ferrous work-pieces. However, the applicable cutting speed depends on the nature of the work and ranges about 300m/min or more for hard material (e.g., Test Example 2), or about 700m/min or more for relatively soft material. The range of the ferrous work-pieces which can be successfully cut is extensive, and the cutting tools exhibit excellent cutting property not only on cast iron, but also on steel. In other words, the cutting tool according to the present invention is significantly small in wear in respect of the flank and the cutting face of the work-piece, and yet offers no chipping, fracture, and so on. In particular, the cutting tool made of an aluminum-based matrix is suitable for cutting the work-piece of alloy steel in general, and, the cutting tool made of a TiC-based matrix is suitable for cutting the work-piece of ductile cast iron (a ferrous material which is recognized by those skilled in the art to be very difficult to cut among various cast irons).

With a view to enabling those persons skilled in the art to readily practise the present invention, the following several preferred examples are presented along with some cutting test examples.

### EXAMPLES A1 AND A2

Starting material powder of Al₂O₃ having an average particle size of 0.7 µm, SiC whiskers having a diameter of from 0.1 to 1.0 µm (the principal diameter thereof being from 0.2 to 0.5 µm), a length of from 50 to 200 µm, an aspect ratio of from 50 to 300, and a density of 3.19 g/cm³, and an additive(s) having an average particle size of from 0.5 to 3.0 µm were mixed in accordance with the ratios as shown in Table 1 or 2 below. This mixture of the starting material was mixed in a ball mill for a period of time from 2 to 48 hours, after which it was dried to obtain a base powder for the substrate.

Then, this base powder was sintered in a graphite mold by the hot pressing (HP) method at a temperature ranging from 1,600°C to 1,950°C, for a period of time from 15 minutes to one hour, and under a pressure of 200 kg/cm². The thus obtained sintered body was subjected to cutting and grinding based on "SNGN 432" to thereby prepare a substrate. In the subsequent step, a coating layer also as shown in Table 1 or 2 below was placed on the surface of this substrate by a chemical vapor deposition (CVD) method, thereby manufacturing the cutting tool.

**Table 1**

| Sample Nos. | | Substrate | | Coating Layer | | | | K_{IC} (MN/m^{3/2}) |
|---|---|---|---|---|---|---|---|---|
| | | Al₂O₃ (wt%) | SiC Whiskers (wt%) | first | second | third | Average Thickness (µm) | |
| Example (A1) | 1 | 80 | 20 | Al₂O₃ | | | 1 | 5.7 |
| | 2 | 80 | 20 | AlON | TiCNO | | 2 | 5.7 |
| | 3 | 80 | 20 | AlN | Al₂O₃ | | 3 | 5.7 |
| | 4 | 50 | 50 | TiC | | | 3 | 7.9 |
| | 5 | 40 | 60 | TiN | | | 8 | 8.4 |
| | 6 | 92 | 8 | AlON | Al₂O₃ | | 4 | 4.4 |
| | 7 | 70 | 30 | Al₂O₃ | TiC | | 10 | 6.4 |
| | 8 | 60 | 40 | HfC | | | 1 | 7.5 |
| | 9 | 75 | 25 | TiN | | | 4 | 6.1 |
| | 10 | 90 | 10 | TiC | TiN | | 6 | 4.6 |
| | 11 | 90 | 10 | Al₂O₃ | | | 0.5 | 4.6 |
| | 12 | 70 | 30 | TiCO | AlON | Al₂O₃ | 7 | 6.4 |
| | 13 | 70 | 30 | TiN | | | 5 | 6.4 |
| | 14 | 70 | 30 | AlON | ZrC | | 5 | 6.4 |
| | 15 | 45 | 55 | HfO₂ | | | 3 | 8.1 |
| | 16 | 65 | 35 | AlN | Al₂O₃ | | 4 | 7.0 |
| | 17 | 55 | 45 | TiC | HfN | | 17 | 7.5 |
| Comparison (A) | 1 | 60 | 40 | - | | | - | 7.5 |
| | 2 | 60 | 40 | TiC | | | 0.1 | 7.5 |
| | 3 | 90 | 10 | TiN | Al₂O₃ | | 22 | 4.6 |
| | 4 | 97 | 3 | Al₂O₃ | | | 2 | 3.8 |
| | 5 | 30 | 70 | AlON | Al₂O₃ | | 5 | -* |
| | 6 | Al₂O₃ single system** | | - | | | | 3.2 3.2 |
| | 7 | Al₂O₃ single system** | | Al₂O₃ | | | 2 | 3.2 |

| | | | | | | | | |
|---|---|---|---|---|---|---|---|---|
| * It was impossible to determine K_{IC} value because of insufficient sintering. | | | | | | | | |
| ** High pure Al₂O₃ was HIP sintered to obtain the substrate. | | | | | | | | |

**Table 2**

| Sample Nos. | | Substrate | | | | Coating Layer | | | |
|---|---|---|---|---|---|---|---|---|---|
| | | Al₂O₃ (wt%) | SiC Whiskers (wt%) | Substituent (wt%) | | first | second | third | Average Thickness (µm) |
| Example (A2) | 1 | 75 | 10 | TiC 15 | | AlON | Al₂O₃ | TiC | 4 |
| | 2 | 82 | 7 | TiN 10 | ZrC 1 | Al₂O₃ | | | 1 |
| | 3 | 70 | 10 | TiB₂ 20 | | Al₂O₃ | | | 2 |
| | 4 | 80 | 15 | ZrO₂ 5 | | Al₂O₃ | | | 2 |
| | 5 | 70 | 20 | ZrO₂ 10 | | AlON | Al₂O₃ | | 4 |
| | 6 | 72 | 25 | HfO₂ 3 | | TiC | | | 5 |
| | 7 | 63 | 7 | TiC 15 | TiN 15 | TiN | | | 5 |
| | 8 | 64 | 18 | TiC 15 | Ta 3 | AlON | Al₂O₃ | | 4 |
| | 9 | 53 | 45 | VC 2 | | TiC | TiN | | 10 |
| | 10 | 70 | 20 | WC 5 | TaC 5 | AlN | AlON | Al₂O₃ | 6 |
| | 11 | 77 | 10 | ZrO₂ 8 | TiN 5 | Al₂O₃ | | | 3 |
| | 12 | 75 | 10 | TiC 10 | WB 5 | AlON | Al₂O₃ | | 6 |
| | 13 | 65 | 15 | TiC 15 | MoB 5 | Al₂O₃ | | | 3 |
| | 14 | 65 | 20 | ZrO₂ 10 | ZrN 5 | TiC | HfN | | 13 |
| | 15 | 79 | 15 | TiN 5 | ZrC 1 | TiCO | TiN | | 8 |
| | 16 | 70 | 15 | SiC 15 | | TiCNO | Al₂O₃ | | 8 |
| | 17 | 74 | 20 | TiC 5 | Ti 1 | AlON | ZrC | | 5 |
| Comparison (A2) | 1 | 75 | 10 | TiB₂ 15 | | - | | | - |
| | 2 | 50 | 40 | TiC 10 | | Al₂O₃ | | | 0.1 |
| | 3 | 65 | 35 | - | | TiC | | | 5 |
| | 4 | 25 | 60 | TiC 15 | | Al₂O₃ | | | 3 |
| | 5 | 50 | 10 | TiB₂ 40 | | Al₂O₃ | | | 2 |
| | 6 | Al₂O₃ single system | | | | - | | | |

### EXAMPLE B

In the same manner as in Examples A1 and A2 above, cutting tools were manufactured, with the exception that AlN powder (having an average particle size of 1.0 µm) was used as the matrix material for the substrate.

The conditions for manufacturing the same are shown in Table 3 below.

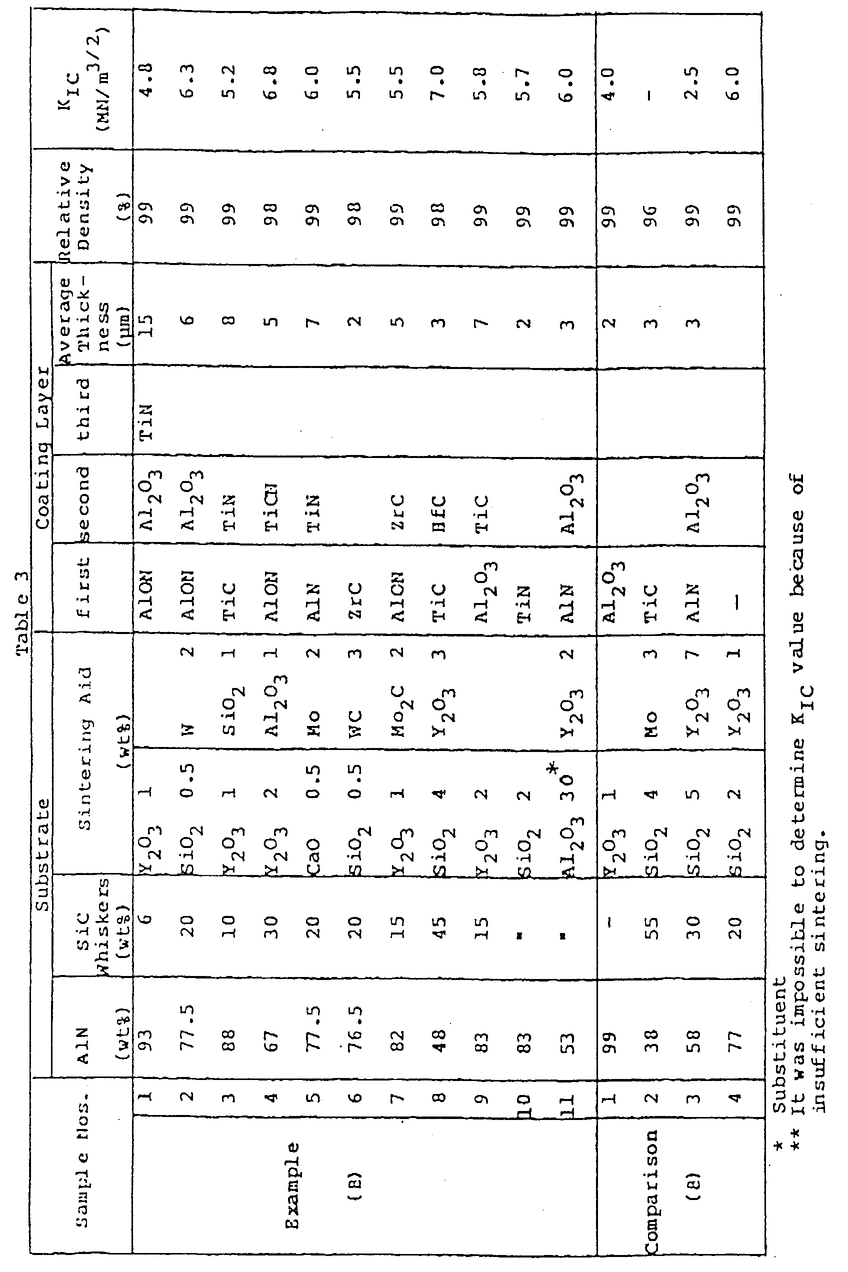

### EXAMPLES C, D AND E

In the same manner as in Examples A1 and A2 above, cutting tools were manufactured, with the exception that AlON powder (having an average particle diameter of 0.8 µm), 3Al₂O₃-2SiO₂ powder (having an average particle diameter of 0.7 µm), or TiC powder (having an average particle diameter of 0.8 µm) was used as matrix material for the substrate.

The conditions for the manufacture thereof are shown in the following Table 4.

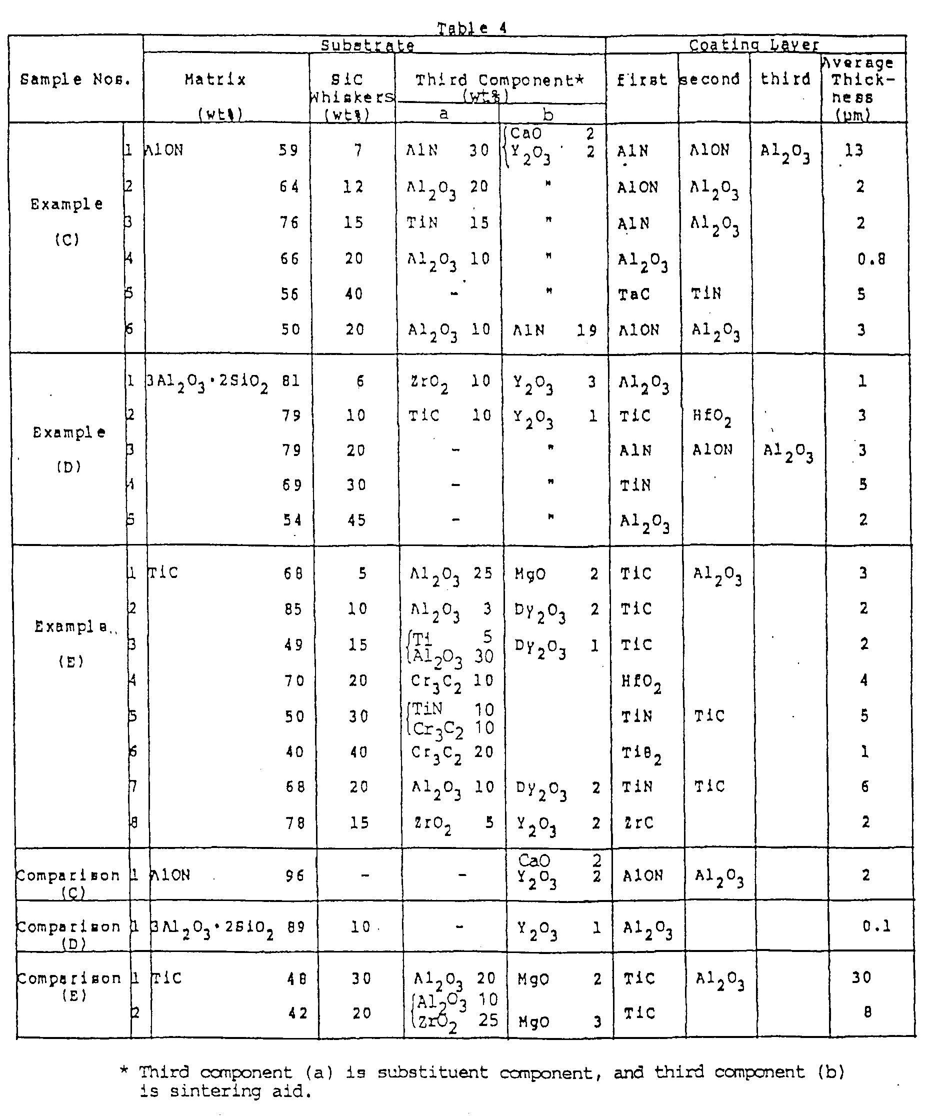

### TEST EXAMPLE 1

With use of the cutting tools obtained in Example A above, cutting tests were conducted to examine the wear of the tools on the flank and the face of a work-piece.

The conditions for the test are as follows.
- Work:: "SCR 420" carburized material
- Cutting speed:: 500 m/min.
- Rate of feed:: 0.31 mm/rev.
- Depth of cut:: 1 mm
- Wear:: quantity after passage of 1 min. 15 sec.

The test results are as shown in the following Table 5.

### TEST EXAMPLE 2

With use of the cutting tools obtained in Example A2 above, cutting tests were conducted to examine the wear of the cutting tools on the flank and the face of the work-piece.

The conditions for the test are as follows.
- Work:: "SNCM 8" (HB 300)
- Cutting speed:: 350 m/min.
- Rate of feed:: 0.3 mm/rev.
- Depth of cut:: 1 mm
- Wear:: quantity after passage of 1 min. 15 sec.

The test results are as shown in the following Table 6.

**Table 5**

| Sample Nos. | | Wear | |
|---|---|---|---|
| | | flank (mm) | face (mm |
| Example (A1) | 1 | 0.06 | 0 |
| | 2 | 0.06 | 0 |
| | 3 | 0.04 | 0 |
| | 4 | 0.08 | 0 |
| | 5 | 0.10 | 0 |
| | 6 | 0.04 | 0 |
| | 7 | 0.05 | 0 |
| | 8 | 0.13 | 0.22 |
| | 9 | 0.11 | 0 |
| | 10 | 0.09 | 0 |
| | 11 | 0.10 | 0.12 |
| | 12 | 0.05 | 0 |
| | 13 | 0.12 | 0 |
| | 14 | 0.07 | 0 |
| | 15 | 0.12 | 0 |
| | 16 | 0.05 | 0 |
| | 17 | 0.06 | 0 |
| Comparison (A1) | 1 | 0.40 | 0.51 |
| | 2 | 0.35 | 0.62 |
| | 3 | Fracture | |
| | 4 | 1.2* | |
| | 5 | Fracture | |
| | 6 | Chipping | |
| | 7 | Chipping | |

| | | | |
|---|---|---|---|
| * It occured unusual wear owing to chipping. | | | |

**Table 6**

| Sample Nos. | | Wear | |
|---|---|---|---|
| | | flank (mm) | face (mm) |
| Example (A2) | 1 | 0.09 | 0 |
| | 2 | 0.09 | 0.15 |
| | 3 | 0.08 | 0.05 |
| | 4 | 0.08 | 0 |
| | 5 | 0.07 | 0 |
| | 6 | 0.13 | 0 |
| | 7 | 0.10 | 0 |
| | 8 | 0.08 | 0 |
| | 9 | 0.12 | 0 |
| | 10 | 0.07 | 0 |
| | 11 | 0.08 | 0 |
| | 12 | 0.07 | 0 |
| | 13 | 0.09 | 0 |
| | 14 | 0.10 | 0 |
| | 15 | 0.09 | 0 |
| | 16 | 0.09 | 0 |
| | 17 | 0.08 | 0 |
| Comparison (A2) | 1 | 0.33 | 0.45 |
| | 2 | 0.52 | 0.52 |
| | 3 | Chipping | |
| | 4 | Fracture | |
| | 5 | Fracture | |
| | 6 | Fracture | |

### TEST EXAMPLE 3

With use of the cutting tools obtained in Examples A to E above, and those obtained in Comparative Examples, cutting tests were carried out to examine the wear of the cutting tools on the flank and the face of the work-piece.

The conditions for the test are as follows.
- Work:: "SNCM 8" (HB 300)
- Cutting speed:: 450 m/min.
- Depth of cut:: 1 mm
- Rate of feed:: 0.15 mm/rev.
- Cutting time:: 1 min.

The test results are as shown in the following Table 7 and 8.

**Table 7**

| Sample Nos. | | Wear | |
|---|---|---|---|
| | | flank (mm) | face (mm) |
| Example (B) | 1* | 0.06 | 0 |
| | 2 | 0.06 | 0 |
| | 3 | 0.11 | 0 |
| | 4 | 0.10 | 0 |
| | 5 | 0.09 | 0 |
| | 6 | 0.15 | 0 |
| | 7 | 0.09 | 0 |
| | 8 | 0.14 | 0 |
| | 9 | 0.08 | 0 |
| | 10 | 0.13 | 0 |
| | 11 | 0.12 | 0 |
| Comparison (B) | 1 | Fracture | |
| | 2** | Chipping | |
| | 3 | Fracture | |
| | 4 | 0.36 | 0.40 |

| | | | |
|---|---|---|---|
| * Partial chipping. | | | |
| ** It occured unusual wear owing to chipping. | | | |

**Table 8**

| Sample Nos. | | Wear | |
|---|---|---|---|
| | | flank (mm) | face (mm) |
| Example (A1) | 3 | 0.05 | 0 |
| | 7 | 0.07 | 0 |
| | 9 | 0.16 | 0.12 |
| | 11 | 0.10 | 0.09 |
| Example (A2) | 5 | 0.06 | 0 |
| | 12 | 0.06 | 0 |
| Example (C) | 1 | 0.06 | 0 |
| | 2 | 0.09 | 0 |
| | 3 | 0.09 | 0 |
| | 4 | 0.15 | 0.20 |
| | 5 | 0.14 | 0 |
| | 6 | 0.15 | 0 |
| Example (D) | 1 | 0.10 | 0 |
| | 2 | 0.15 | 0 |
| | 3 | 0.09 | 0 |
| | 4 | 0.20 | 0.15 |
| | 5 | 0.08 | 0 |
| Example (E) | 2 | 0.20 | 0.11 |
| | 7 | 0.24 | 0.14 |
| Comparison (C) | 1 | fracture after 23 seconds | |
| Comparison (D) | 1 | 0.66 | 0.45 |

### TEST EXAMPLE 4

With use of the cutting tools obtained in Examples A1, A2, B and E above as well as those obtained in Comparative Examples, cutting tests were carried out to examine the wear of the cutting tools with respect to the flank and the face of the work-piece.

The conditions for the test are as follows.
- Work:: "FCD 45" (HB 180)
- Cutting speed:: 500 m/min.
- Depth of cut:: 0.5 mm
- Rate of feed:: 0.2 mm/rev.
- Cutting time:: 20 min.

The test results are as shown in the following Table 9.

As is apparent from the Table 9, the cutting tools obtained in Example E (i.e., made of the TiC substrate) is particularly suitable for high speed cutting of the ductile cast iron.

### TEST EXAMPLE 5

With use of the cutting tools obtained in Examples A1, A2 and B above, cutting tests were carried out to examine the wear of the cutting tool with respect to the flank and the face of the work-piece.

The conditions for the test are as follows.
- Work:: "SCM 415"
- Cutting speed:: 800 m/min.
- Depth of cut:: 3 mm
- Rate of feed:: 0.31 mm/rev.
- Cutting time:: 5 min.

The test results are as shown in the following Table 10.

This test is an example of cutting a work-piece at a considerably high speed.

**Table 9**

| Sample Nos. | | Wear | |
|---|---|---|---|
| | | flank (mm) | face (mm) |
| Example (A1) | 7 | 0.45 | 0.16 |
| Example (A2) | 5 | 0.47 | 0.16 |
| Example (B) | 2 | 0.48 | 0.17 |
| Example (E) | 1 | 0.33 | 0.07 |
| | 2 | 0.31 | 0.07 |
| | 3 | 0.38 | 0.10 |
| | 4 | 0.40 | 0.13 |
| | 5 | 0.42 | 0.12 |
| | 6 | 0.39 | 0.10 |
| | 7 | 0.35 | 0.08 |
| | 8 | 0.40 | 0.09 |
| Comparison (E) | 1 | microchipping after 15 seconds | |
| | 2 | 0.67 | 0.40 |

**Table 10**

| Sample Nos. | | Wear | |
|---|---|---|---|
| | | flank (mm) | face (mm) |
| Example (A1) | 6 | 0.20 | 0 |
| | 9 | 0.38 | 0 |
| Example (A2) | 3 | 0.23 | 0 |
| | 14 | 0.35 | 0.10 |
| Example (B) | 2 | 0.22 | 0 |
| | 8 | 0.42 | 0.11 |
| Comparison (A) | 1 | 1.20 | 0.81 |
| Comparison (A2) | 1 | Chipping | |
| Comparison (B) | 14 | 0.98 | 0.51 |

So far the present invention has been described with reference to preferred examples of the cutting tools and the results of the cutting tests thereon. It should however be noted that the invention is not limited to these examples alone.

## Claims

1. A material used for cutting tools, which comprises in combination:
a) a substrate based on a matrix composed of at least one selected from the group consisting of Al₂O₃, AlN, AlON, 3 Al₂O₃ · 2 SiO ₂ (mullite) and TiC, the substrate comprising 5 to 50% by weight of SiC whiskers with respect to said substrate, the whiskers being uniformly dispersed therein; and
b) one or more coating layers composed of at least one of oxides, nitrides, carbides, borides and oxynitrides of at least one of aluminum, IVa and Va group elements in the International Periodic Table, said coating layer being formed on the surface of said substrate to a thickness ranging from about 0.3 to about 20 µm.

2. Material for the cutting tools as set forth in claim 1, wherein the quantity of said SiC whiskers is in a range of from 5 to 30% by weight, preferably 15 to 30% by weight.

3. Material for cutting tools as set forth in claim 1 or 2, wherein a layer to be in direct contact with said substrate, among said coating layers, is composed of the same metallic component as that of said matrix for the substrate.

4. Material for cutting tools as set forth in claim 3, wherein the metallic component of said matrix for the substrate is aluminum, and at least the layer to be in direct contact with said substrate is composed of aluminum.

5. Material for cutting tools as set forth in claim 4, wherein said matrix for the substrate is composed of one selected from the group consisting of Al₂O₃, AlN, AlON, 3 Al₂O₃ · 2 SiO ₂ and said layer to be in direct contact with said substrate is composed of one selected from the group consisting of Al₂O₃, AlN and AlON.

6. Material for cutting tools as set forth in claim 3, wherein the metallic component of said matrix for the substrate is composed of one of the elements belonging to the IVa group of the Periodic Table, and at least the layer to be in direct contact with said substrate is composed of one of elements belonging to the IVa group of the Periodic Table.

7. Material for cutting tools as set forth in claim 6, wherein said matrix for the substrate is TiC, and said layer to be in direct contact with said substrate is one elected from the group consisting of TiC, TiN, TiCN, TiCO, TiON and TiCON.

8. Material for cutting tools as set forth in one of the preceding claims, wherein the metallic component of a layer to be in contact with a work-piece, among said coated layers, is one selected from the group consisting of aluminum and the group IVa elements of the Periodic Table.

9. Material for cutting tools as set forth in one of the preceding claims, wherein no more than 50% by weight of the substrate matrix has been substituted with at least one substituent component selected from the groups consisting of metals, oxides, nitrides, carbides, and borides of elements Al, Si, and IVa, Va and VIa groups of the International Periodic Table.

10. A material for cutting tools, which comprises in combination:
a) a substrate based on a Al₂O₃ matrix, and comprising 5 to 70% by weight of SiC whiskers, and
b) one or more coating layers composed of oxides, nitrides, carbides, carbonitrides, oxycarbides or oxycarbo-nitrides of IVa or Va group element in the International Periodic Table, or oxide, nitride or oxynitride of aluminum, said coating layer being formed on the surface of said substrate to a thickness ranging from about 0.3 to about 20 µm.

11. A material for cutting tools, which comprises in combination:
a) a substrate based on an Al₂O₃ matrix comprising 5 to 50% by weight of SiC whiskers;
b) 1 to 35% by weight of at least one of substituting component selected from the group consisting of metals of IVa, Va or VIa group elements in the International Period Table, oxides, nitrides, carbides or borides of these metallic elements, or solid solutions of these compounds, and SiC; and
c) one or more coating layers composed of oxides, nitrides, carbides, carbonitrides, oxycarbides or oxycarbo-nitrides of IVa or Va group elements in the International Periodic Table, or oxide, nitride, or oxynitride of aluminum, said coating layer being formed on the surface of said substrate to a thickness ranging from about 0.3 µm to about 20 µm.

12. A material for cutting tools, which comprises in combination:
a) a substrate based on AlN matrix, and comprising 5 to 50% by weight of SiC whiskers; and
b) one or more coating layers composed of at least one of oxides, nitrides, carbides, carbonitrides, oxycarbides or oxycarbo-nitrides of IVa or Va group elements of the International Periodic Table, or oxide, nitride and oxynitride of aluminum, said coating layer being formed on the surface of said substrate to a thickness of from about 0.3 to about 20 µm.

13. Material for cutting tools as set forth in any one of the preceding claims, wherein said coating layer is a single layer of 1-10 µm in thickness.

14. Material for cutting tools as set forth in one of claims 1 to 12, wherein said coating layer has a multiply layer structure with an innermost layer being 0.2-5 µm and an outer layer being 1-10 µm in thickness.

15. Use of a material according to one of the preceding claims for cutting a ferrous work piece.

16. Cutting tool composed of the material as set forth in any one of claims 1 to 14.

17. A method for cutting a ferrous work-piece be means of the cutting tool as set forth in claim 16.

18. The method according to claim 17 wherein the cutting operation is done at least at a cutting speed of about 300 m/minute.

19. The method for cutting ductile cast iron comprising use of a cutting tool composed of the material according to one of claims 6 to 9.

## Patentansprüche

1. Für Zerspanungswerkzeuge verwendetes Material, das in Kombination folgendes umfaßt:
a) ein Substrat auf der Basis einer Matrix, zusammengesetzt aus mindestens einem Element ausgewählt aus der Gruppe bestehend aus Al₂O₃, AlN, AlON, 3Al₂O₃ · 2 SiO₂ (Mullit) und TiC, wobei das Substrat 5 bis 50 Gew.% SiC-Whisker, bezogen auf das Substrat, aufweist, wobei die Whisker gleichmäßig darin verteilt sind; und
b) eine oder mehrere Beschichtungslagen, zusammengesetzt aus mindestens einer Verbindung ausgewählt aus Oxiden, Nitriden, Carbiden, Boriden und Oxynitriden von mindestens einem Element ausgewählt aus Aluminium, Elementen der Gruppe IVa und Va des internationalen Periodensystems, wobei die Beschichtungslage auf der Oberfläche des Substrats bis zu einer Dicke von etwa 0,3 bis etwa 20 µm ausgebildet ist.

2. Material für Zerspanungswerkzeuge gemäß Anspruch 1, bei dem die Menge der SiC-Whisker im Bereich von 5 bis 30 Gew.%, vorzugsweise 15 bis 30 Gew.%, liegt.

3. Material für Zerspanungswerkzeuge gemäß Anspruch 1 oder 2, bei dem eine in direktem Kontakt mit dem Substrat stehende Lage unter den Beschichtungslagen aus dem gleichen metallischen Bestandteil zusammengesetzt ist wie jenem der Matrix für das Substrat.

4. Material für Zerspanungswerkzeuge gemäß Anspruch 3, bei dem der metallische Bestandteil der Matrix für das Substrat Alumininium ist und mindestens die direkt mit dem Substrat in Kontakt stehende Lage Aluminium umfaßt.

5. Material für Zerspanungswerkzeuge gemäß Anspruch 4, bei dem die Matrix für das Substrat aus einem Element ausgewählt aus der Gruppe bestehend aus Al₂O₃, AlN, AlON, 3Al₂O₃ · 2 SiO₂ zusammengesetzt ist und die direkt mit dem Substrat in Kontakt stehende Lage aus einem Element ausgewählt aus der Gruppe bestehend aus Al₂O₃, AlN und AlON zusammengesetzt ist.

6. Material für Zerspanungswerkzeuge gemäß Anspruch 3, bei dem der metallische Bestandteil der Matrix für das Substrat aus einem der Elemente, welche zur Gruppe IVa des Periodensystems gehören, zusammengesetzt ist, und mindestens die direkt mit dem Substrat in Kontakt stehende Lage aus einem der Elemente, welche zur Gruppe IVa des Periodensystems gehören, zusammengesetzt ist.

7. Material für Zerspanungswerkzeuge gemäß Anspruch 6, bei dem die Matrix für das Substrat TiC ist, und die direkt mit dem Substrat in Kontakt stehende Lage eines der Elemente ausgewählt aus der Gruppe bestehend aus TiC, TiN, TiCN, TiCO, TiON und TiCON ist.

8. Material für Zerspanungswerkzeuge gemäß einem der vorhergehenden Ansprüche, bei dem der metallische Bestandteil einer mit einem Werkstück in Kontakt stehenden Lage unter den Beschichtungslagen ein Element ausgewählt aus der Gruppe bestehend aus Aluminium und den Elementen der Gruppe IVa des Periodensystems ist.

9. Material für Zerspanungswerkzeuge gemäß einem der vorhergehenden Ansprüche, bei dem nicht mehr als 50 Gew.% der Substratmatrix mit mindestens einem Substituentenbestandteil ausgewählt aus den Gruppen bestehend aus Metallen, Oxiden, Nitriden, Carbiden und Boriden der Elemente Al, Si und Gruppen IVa, Va und VIa des internationalen Periodensystems substituiert sind.

10. Material für Zerspanungswerkzeuge, das in Kombination folgendes aufweist:
a) ein Substrat auf der Basis einer Al₂O₃-Matrix mit 5 bis 70 Gew.% SiC-Whiskern, und
b) eine oder mehrere Beschichtungslagen, zusammengesetzt aus Oxiden, Nitriden, Carbiden, Carbonitriden, Oxycarbiden oder Oxycarbo-Nitriden von Elementen der Gruppe IVa oder Va des internationalen Periodensystems, oder Oxid, Nitrid oder Oxynitrid von Aluminium, wobei die Beschichtungslage auf der Oberfläche des Substrats bis zu einer Dicke im Bereich von etwa 0,3 bis etwa 20 µm ausgebildet ist.

11. Material für Zerspanungswerkzeuge, das in Kombination folgendes aufweist:
a) ein Substrat auf der Basis einer Al₂O₃-Matrix mit 5 bis 50 Gew.% SiC-Whiskern,
b) 1 bis 35 Gew.% mindestens eines Substituentenbestandteils ausgewählt aus der Gruppe bestehend aus Metallen der Elemente der Gruppe IVa, Va oder VIa des internationalen Periodensystems, Oxiden, Nitriden, Carbiden oder Boriden dieser metallischen Elemente, oder festen Lösungen dieser Verbindungen, sowie SiC; und
c) eine oder mehrere Beschichtungslagen, zusammengesetzt aus Oxiden, Nitriden, Carbiden, Carbonitriden, Oxycarbiden oder Oxycarbo-Nitriden von Elementen der Gruppe IVa oder Va des internationalen Periodensystems, oder Oxid, Nitrid oder Oxynitrid von Aluminium, wobei die Beschichtungslage auf der Oberfläche des Substrats bis zu einer Dicke im Bereich von etwa 0,3 bis etwa 20 µm ausgebildet ist.

12. Material für Zerspanungswerkzeuge, das in Kombination folgendes aufweist:
a) ein Substrat auf der Basis einer AlN-Matrix mit 5 bis 50 Gew.% SiC-Whiskern, und
b) eine oder mehrere Beschichtungslagen, zusammengesetzt aus mindestens einer Verbindung ausgewählt aus Oxiden, Nitriden, Carbiden, Carbonitriden, Oxycarbiden oder Oxycarbo-Nitriden von Elementen der Gruppe IVa oder Va des internationalen Periodensystems, oder Oxid, Nitrid und Oxynitrid von Aluminium, wobei die Beschichtungslage auf der Oberfläche des Substrats bis zu einer Dicke im Bereich von etwa 0,3 bis etwa 20 µm ausgebildet ist.

13. Material für Zerspanungswerkzeuge gemäß einem der vorhergehenden Ansprüche, bei dem die Beschichtungslage eine Einzellage mit einer Dicke von 1 - 10 µm ist.

14. Material für Zerspanungswerkzeuge gemäß einem der Ansprüche 1 bis 12, bei dem die Beschichtungslage eine Mehrschichtlagenstruktur aufweist, wobei die Dicke einer innersten Lage 0,2 - 5 µm und einer äußeren Lage 1 - 10 µm beträgt.

15. Verwendung eines Materials gemäß einem der vorhergehenden Ansprüche zur spanabhebenden Bearbeitung eines Eisenwerkstücks.

16. Zerspanungswerkzeug, dar das Material gemäß einem der Ansprüche 1 bis 14 umfaßt.

17. Verfahren zur spanabhebenden Bearbeitung eines Eisenwerkstücks durch das Zerspanungswerkzeug gemäß Anspruch 16.

18. Verfahren gemäß Anspruch 17, bei dem der Zerspanungsvorgang mindestens bei einer Zerspanungsgeschwindigkeit von etwa 300 m/Minute ausgeführt wird.

19. Verfahren zur spanabhebenden Bearbeitung von Kugelgraphitgußeisen, das die Verwendung eines Zerspanungswerkzeugs umfaßt, welches aus dem Material gemäß einem der Ansprüche 6 bis 9 zusammengesetzt ist.

## Revendications

1. Matériau utilisé pour des outils de coupe, qui comprend en combinaison :
a) un substrat à base d'une matrice comprenant au moins l'un des composés choisis dans le groupe consistant en Al₂O₃, AlN, AlON, 3Al₂O₃ - 2 SiO₂ (mullite) et TiC, le substrat comprenant de 5 à 50% en poids de fils monocristallins de SiC par rapport audit substrat, les fils monocristallins étant uniformément dispersés dans celui-ci ; et
b) une ou plusieurs couches de revêtement comprenant au moins l'un des composés suivants : des oxydes, des nitrures, des carbures, des borures et des oxynitrures d'au moins l'un des éléments suivants : de l'aluminium, des éléments des groupes IVa et Va de la Classification Périodique des Eléments, ladite couche de revêtement étant formée sur la surface dudit substrat jusqu'à une épaisseur qui va d'environ 0,3 à environ 20 µm.

2. Matériau pour outils de coupe selon la revendication 1, dans lequel la quantité desdits fils monocristallins de SiC est comprise entre 5 et 30% en poids, de préférence entre 15 et 30% en poids.

3. Matériau pour outils de coupe selon la revendication 1 ou 2, dans lequel la couche qui doit être directement en contact avec ledit substrat, parmi lesdites couches de revêtement, est composée du même composant métallique que celui de ladite matrice du substrat.

4. Matériau pour outils de coupe selon la revendication 3, dans lequel le composant métallique de ladite matrice du substrat est de l'aluminium, et au moins la couche qui doit être directement en contact avec ledit substrat est composée d'aluminium.

5. Matériau pour outils de coupe selon la revendication 4, dans lequel ladite matrice du substrat comprend l'un des composés choisis dans le groupe consistant en Al₂O₃, AlN, AlON, 3Al₂O₃ - 2 SiO₂, et ladite couche qui doit être directement en contact avec ledit substrat comprend l'un des composés choisis dans le groupe consistant en Al₂O₃, AlN et AlON.

6. Matériau pour outils de coupe selon la revendication 3, dans lequel le composant métallique de ladite matrice du substrat est composé de l'un des éléments appartenant au groupe IVa de la Classification Périodique, et au moins la couche qui doit être directement en contact avec ledit substrat est composée de l'un des éléments appartenant au groupe IVa de la Classification Périodique.

7. Matériau pour outils de coupe selon la revendication 6, dans lequel ladite matrice du substrat est TiC et ladite couche qui doit être directement en contact avec ledit substrat est choisie dans le groupe consistant en TiC, TiN, TiCN, TiCO, TiON, et TiCON.

8. Matériau pour outils de coupe selon l'une des revendications précédentes, dans lequel le composant métallique d'une couche qui doit être en contact avec une pièce à usiner, parmi lesdites couches de revêtement, est choisi dans le groupe consistant en l'aluminium et les éléments du groupe IVa de la Classification Périodique.

9. Matériau pour outils de coupe selon l'une des revendications précédentes, dans lequel pas plus de 50% en poids de la matrice du substrat ont été substitués par au moins un composant de substitution choisi dans les groupes consistant en les métaux, les oxydes, les nitrures, les carbures et les borures des éléments Al, Si et des groupes IVa, Va et VIa de la Classification Périodique des Eléments.

10. Matériau pour outils de coupe, qui comprend en combinaison :
a) un substrat à base d'une matrice Al₂O₃ et comprenant de 5 à 70% en poids de fils monocristallins de SiC, et
b) une ou plusieurs couches de revêtement composées d'oxydes, de nitrures, de carbures, de carbonitrures, d'oxycarbures ou d'oxycarbo-nitrures d'un élément du groupe IVa ou Va de la Classification Périodique des Eléments, ou d'un oxyde, d'un nitrure ou d'un oxynitrure d'aluminium, ladite couche de revêtement étant formée sur la surface dudit substrat jusqu'à une épaisseur qui va d'environ 0,3 à environ 20 µm.

11. Matériau pour outils de coupe, qui comprend en combinaison :
a) un substrat à base d'une matrice Al₂O₃ comprenant de 5 à 50% en poids de fils monocristallins de SiC ;
b) 1 à 35% en poids d'au moins un composant de substitution choisi dans le groupe consistant en les métaux des éléments du groupe IVa, Va ou VIa de la Classification Périodique des Eléments, les oxydes, les nitrures, les carbures ou les borures de ces éléments métalliques, ou des solutions solides de ces composés, et SiC ; et
c) une ou plusieurs couches de revêtement composées d'oxydes, de nitrures, de carbures, de carbonitrures, d'oxycarbures ou d'oxycarbo-nitrures d'éléments du groupe IVa ou Va de la Classification Périodique des Eléments, ou d'un oxyde, d'un nitrure ou d'un oxynitrure d'aluminium, ladite couche de revêtement étant formée sur la surface dudit substrat jusqu'à une épaisseur qui va d'environ 0,3 µm à environ 20 µm.

12. Matériau pour outils de coupe qui comprend en combinaison :
a) un substrat à base d'une matrice AlN et comprenant de 5 à 50% en poids de fils monocristallins de SiC ; et
b) une ou plusieurs couches de revêtement comprenant au moins l'un des composés suivants : des oxydes, des nitrures, des carbures, des carbonitrures, des oxycarbures ou des oxycarbo-nitrures d'éléments du groupe IVa ou Va de la Classification Périodique des Eléments, ou d'un oxyde, d'un nitrure et d'un oxynitrure d'aluminium, ladite couche de revêtement étant formée sur la surface dudit substrat jusqu'à une épaisseur qui va d'environ 0,3 à environ 20 µm.

13. Matériau pour outils de coupe selon l'une quelconques des revendications précédentes, dans lequel ladite couche de revêtement est une couche unique d'une épaisseur de 1 à 10 µm.

14. Matériau pour outils de coupe selon l'une des revendications 1 à 12, dans lequel ladite couche de revêtement a une structure de couche à jets multiples, une couche la plus interne ayant une épaisseur de 0,2 à 5 µm et une couche externe ayant une épaisseur de 1 à 10 µm.

15. Utilisation d'un matériau selon l'une des revendications précédentes pour découper une pièce à usiner ferreuse.

16. Outil de coupe composé du matériau selon l'une quelconque des revendications 1 à 14.

17. Procédé pour découper une pièce à usiner ferreuse au moyen de l'outil de coupe selon la revendication 16.

18. Procédé selon la revendication 17, dans lequel l'opération de coupe est effectuée à une vitesse de coupe d'au moins environ 300 m/minute.

19. Procédé pour découper du fer coulé ductile comprenant l'utilisation d'un outil de coupe composé du matériau selon l'une des revendications 6 à 9.
